# EUROPÄISCHE PATENTSCHRIFT

(11) **EP 2 907 131 B1**
(45) Veröffentlichungstag und Bekanntmachung des Hinweises auf die Patenterteilung: **31.03.2021**
(21) Anmeldenummer: 13779782.5
(22) Anmeldetag: 11.10.2013
(51) Int. Cl.: G10K 9/22, G10K 9/122, B60Q 5/00

(54) **KRAFTFAHRZEUG MIT WENIGSTENS EINEM SCHALLERZEUGUNGSSYSTEM ZUR ERZEUGUNG EINES KÜNSTLICHEN MOTORENGERÄUSCHES**
MOTOR VEHICLE HAVING AT LEAST ONE SOUND-GENERATING SYSTEM FOR PRODUCING AN ARTIFICIAL ENGINE NOISE
VÉHICULE À MOTEUR DOTÉ D'AU MOINS UN SYSTÈME GÉNÉRATEUR DE SON POUR PRODUIRE UN BRUIT DE MOTEUR ARTIFICIEL

(30) Priorität: 12.10.2012 DE 102012025584; 12.10.2012 DE 102012025585
(43) Veröffentlichungstag der Anmeldung: 19.08.2015
(73) Patentinhaber: Volkswagen Aktiengesellschaft, 38440 Wolfsburg (DE)
(72) Erfinder: FELDHAUS, Jens, 38553 Wasbüttel (DE); LUTTER, Carsten, 14193 Berlin (DE); DUPPER, Denis, 38518 Gifhorn (DE)
(86) Internationale Anmeldenummer: PCT/EP2013/071324
(87) Internationale Veröffentlichungsnummer: WO 2014/057105

(56) Entgegenhaltungen:
- DE-A1-102006 040 344
- DE-A1-102010 005 138
- DE-A1-102011 119 463

## Beschreibung

Die Erfindung betrifft ein Kraftfahrzeug mit wenigstens einem Schallerzeugungssystem zur Erzeugung eines künstlichen Motorengeräusches nach dem Patentanspruch 1. Sie betrifft auch einen Träger für ein Kraftfahrzeug mit den Merkmalen von Patentanspruch 14.

Kraftfahrzeuge, welche auch ohne einen Verbrennungsmotor zumindest zeitweise antreibbar sind, insbesondere Hybrid-, Elektro- und Brennstoffzellenfahrzeuge, sind bei ausschließlich ohne Verbrennungsmotor erfolgendem Antrieb sehr leise. Dies gilt insbesondere bei langsamer Fahrt, beispielsweise in einer Wohngegend. Hieraus ergibt sich eine erhöhte Unfallgefahr für Fußgänger oder Fahrradfahrer, welche beim Annähern eines Kraftfahrzeugs in der Regel das laute Geräusch eines Verbrennungsmotors erwarten.

Daher bestehen weltweit gesetzliche Forderungen bzw. sind solche in Vorbereitung, welche für derartige "geräuschlose" Kraftfahrzeuge im Bereich von 0 bis ca. 50 km/h ein Außengeräusch fordern, da das bisher durch den Verbrennungsmotor erzeugte Geräusch zumindest zeitweise entfallen kann.

Aus der DE 10 2010 005 138 A1 ist ein Kraftfahrzeug mit den Merkmalen vom Oberbegriff des Patentanspruchs 1 bekannt. Das Schallerzeugungssystem besteht dabei aus einem Schwingungserreger, welcher an einem Abgasschalldämpfer eines Abgassystems des Kraftfahrzeugs angeordnet ist.

Eine solche Lösung ist hinsichtlich der Schallabstrahlung bzw. akustischen Eigenschaften und somit der Warnwirkung für Fußgänger und dergleichen nicht optimal.

Zudem erscheint auf Grund der enormen Hitzeentwicklung im unmittelbaren Kontakt mit einer solchen Abgasanlage und der unmittelbaren, ungeschützten Bodennähe die Langzeitstabilität einer solchen Lösung fraglich.

Aus der DE 10 2011 119 463 A1 ist ein Geräuschgenerator in einem Kraftfahrzeug bekannt, der einen herkömmlichen Lautsprecher umfasst. Der Lautsprecher ist in einem Gehäuse aufgenommen, welches über Dämmelemente an einer Halterung befestigt ist. Die Halterung dient ihrerseits zur körperschallentkoppelten Befestigung des Geräuschgenerators am Kraftfahrzeug. Zur Erhöhung der Funktionssicherheit des Geräuschgenerators wird vorgeschlagen, zwischen der Membran des Lautsprechers und dem Gehäuse mehrere Wasserabläufe anzuordnen. Insgesamt ist der Geräuschgenerator aufwändig gestaltet.

Der Erfindung liegt vornehmlich die Aufgabe zu Grunde, ein Kraftfahrzeug mit den Merkmalen vom Oberbegriff von Patentanspruch 1 hinsichtlich der akustischen Eigenschaften des Schallerzeugungssystems zu verbessern.

Diese Aufgabe wird mit den kennzeichnenden Merkmalen von Patentanspruch 1 gelöst. Vorteilhafte Ausführungen beziehungsweise Weiterbildungen der Erfindung sind den jeweiligen Unteransprüchen entnehmbar.

Die Erfindung geht aus von einem Kraftfahrzeug mit wenigstens einem Schallerzeugungssystem zur Erzeugung eines künstlichen Motorengeräusches, welches zumindest einen elektrisch ansteuerbaren Schwingungserreger aufweist, wobei der Schwingungserreger an einem Bauteil befestigt ist, welches von einer Karosserie des Kraftfahrzeugs akustisch und/oder schwingungstechnisch entkoppelt ist.

Erfindungsgemäß wird vorgeschlagen, dass das Bauteil seinerseits über eine Haltevorrichtung am Kraftfahrzeug gehalten ist, welche das Bauteil zumindest zu einem überwiegenden Teil verdeckt.
Durch diese Maßnahme können die akustischen Eigenschaften des Schallerzeugungssystems deutlich verbessert werden. Insbesondere ist dadurch überraschend die Grenzfrequenz des Schallerzeugungssystems, bei der ein Verlust an Schalldruck auftritt, deutlich hin zu niedrigeren Frequenzen verschiebbar.
Dabei ist der Schwingungserreger an einer solchen Seite des Bauteils befestigt, welche von der Haltevorrichtung zumindest zu einem überwiegenden Teil verdeckt wird. Dies führt zu einem besseren Schutz des Schwingungserregers gegen Umwelteinflüsse und damit zu einer Erhöhung der Funktionssicherheit und Langzeitstabilität.
Gemäß einer vorteilhaften Weiterbildung der Erfindung ist vorgesehen, dass die Haltevorrichtung eine Öffnung aufweist, die im Bereich des Schwingungserregers angeordnet ist und diesen umgibt. Hierdurch kann ein Teil des Schwingungserregers bei Schwingungen ungehindert durch die Öffnung ragen, was eine sehr kompakte Bauweise der Haltevorrichtung ermöglicht. Bevorzugt ist dabei die Öffnung in etwa kreisrund und so klein wie möglich gewählt, so dass sie den Schwingungserreger in unmittelbarer Nähe, vorzugsweise in etwa konzentrisch umgibt.
Nach einer weiteren zweckmäßigen Ausgestaltung der Erfindung ist die Öffnung durch ein luftdurchlässiges und flexibles Material verschlossen. Das Material kann beispielsweise schaumstoffartig ausgebildet sein. Hierdurch bleibt trotz weiterer Verbesserung der akustischen Eigenschaften die Beweglichkeit des Schwingungserregers unbehindert. Hinsichtlich der akustischen Eigenschaften können optimale Ergebnisse erzielt werden, wenn das Bauteil von der Haltevorrichtung vollständig abgedeckt wird.
Vorzugsweise ist die Haltevorrichtung einstückig ausgebildet. Hierdurch sind hinsichtlich Fertigungs- und Montagekosten und auch hinsichtlich einer Langzeitstabilität Vorteile erzielbar.

Das Bauteil ist flächig ausgebildet. Flächig heißt dabei, dass die Flächenerstreckung des Bauteils um ein Vielfaches größer ist als seine Dicke. Durch die flächige Ausgestaltung des Bauteils lässt sich dies besonders gut zu Schwingungen anregen. Überdies trägt eine solche Ausgestaltung zu einer kompakten Bauweise bei.

Dabei weist das Bauteil nach einer höchst vorteilhaften Ausbildung des Erfindungsgedankens zungenartige, einstückig mit diesem verbundene Elemente auf. Mittels der zungenartigen Elemente kann das Bauteil höchst effektiv schwingungsentkoppelt an der Haltevorrichtung befestigt werden.

Um die akustische und/oder schwingungstechnische Entkopplung des Bauteils von der Karosserie noch weiter zu verbessern, hat es sich als vorteilhaft erwiesen, wenn das Bauteil akustisch und/oder schwingungstechnisch entkoppelt an der Haltevorrichtung und diese wiederum akustisch und/oder schwingungstechnisch entkoppelt an einem anderen Bauteil des Kraftfahrzeugs befestigt ist. Das andere Bauteil kann beispielsweise eine Motorhaube oder ein Kofferraumdeckel sein.

Die Montage wird vereinfacht, wenn die Haltevorrichtung eine Vertiefung aufweist, in die das den Schwingungserreger haltende Bauteil eingelassen ist.

Um die Integration des Bauteils in das Kraftfahrzeug auch bei beengten Platzverhältnissen zu erleichtern, wird vorgeschlagen, dem Bauteil im Umriss eine in etwa kreisrunde Form zu geben.

Eine andere Weiterbildung der Erfindung sieht noch vor, das Bauteil an einem solchen Träger zu befestigten, an dem zumindest auch wenigstens ein Kühler gehalten ist.
Ein solcher Träger, welcher im Vorderwagen eines Kraftfahrzeugs verbaut wird, dient zur Montage mehrerer Einzelkomponenten, wie beispielsweise eines Kühlers und eines Lüfters und stellt somit eine Integrationsplattform mehrerer Einzelkomponenten im Vorderwagen dar. Ein derartiger Träger wird mitunter daher auch "Montageträger" oder "Strukturträger" genannt. Er kann beispielsweise aus Kunststoff, Aluminium oder Stahl bestehen und wird immer häufiger auch als Hybridbauteil dieser Werkstoffe (PP- oder PR-Kunststoff/Stahl) hergestellt.

Da ein solcher Träger ohnehin im Vorderwagen vorhanden ist, kann durch die erfindungsgemäße Lösung bei geringem Bauraumbedarf und kostengünstig ein Schallerzeugungssystem zur Verfügung gestellt werden. Darüber hinaus ist auf Grund der Positionierung im Vorderwagen, und zwar in unmittelbarer Nähe des Kühlers, eine optimale Schallabstrahlung in Fahrtrichtung möglich.

Eine andere Weiterbildung der Erfindung sieht noch vor, dass das Bauteil akustisch und/oder schwingungstechnisch entkoppelt an einer Motorabschirmung befestigt ist.
Zur Reduzierung der Schallemission nach unten (in Richtung Boden bzw. Fahrbahn) weist eine Motorabschirmung daher zumeist eine unterhalb des Motors mit der Karosserie verbundene, in etwa horizontal ausgerichtete Wandung auf, welche oftmals in etwa auf Höhe des Karosserie-Unterbodens positioniert und dort mit diesem verbunden ist. Zusätzlich oder alternativ können zur Reduzierung der seitlichen Schallabstrahlung auch in etwa vertikal angeordnete Wandungen Bestandteil oder Gegenstand einer Motorabschirmung sein. Auch eine oberhalb des Motors angeordnete Wandung ist mitunter zusätzlich vorzufinden, so dass die Motorabschirmung nahezu kapselartig ausgestaltet ist. Es ist auch denkbar und oftmals üblich, dass die Motorabschirmung nur eine bodenseitige Wandung umfasst.

Es kann also eine ohnehin bereits vorhandene Wandung der Motorabschirmung zur Befestigung des Schallerzeugungssystems kostengünstig verwendet werden. Durch die naturgemäß großflächigen Wandungen einer Motorabschirmung kann auch das den Schwingungserreger tragende Bauteil größer gehalten werden, was eine Erzeugung von tieferen Frequenzen um die 200 Hz begünstigt.

Die Positionierung des Schallerzeugungssystems in der Nähe des Motors begünstigt eine Schallabstrahlung, die als natürlich und vom Motor stammend empfunden wird.

Gemäß einer Weiterbildung der Erfindung ist das Bauteil an einer bodenseitigen Wandung der Motorabschirmung befestigt. Diese weist in der Regel eine besonders große Flächenerstreckung auf, mit bereits erwähnten Vorteilen für das den Schwingungserreger tragende Bauteil.

Alternativ oder zusätzlich ist es jedoch auch möglich, das Bauteil an einer oberen Wandung der Motorabschirmung zu befestigen.

Im Rahmen der Erfindung wird auch Schutz beansprucht für einen Träger für ein Kraftfahrzeug. Der Träger hält wenigstens einen Kühler und wenigstens ein mit wenigstens einem Schwingungserreger verbundenes Bauteil, wobei das Bauteil akustisch und/oder schwingungstechnisch entkoppelt an einer Haltevorrichtung für das Bauteil gehalten ist und von dieser zumindest zu einem überwiegenden Teil verdeckt wird.

Ein solcher Träger kann als vorkonfektioniertes, hochintegriertes Zulieferbauteil im Produktionsprozess in das Kraftfahrzeug eingebaut werden und somit zur Einsparung von Montagezeit und -kosten beitragen.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: den vorderen Teil eines Kraftfahrzeugs von der Seite in einer ersten Ausführungsform der Erfindung,
- Fig. 2: eine vergrößerte Ansicht gemäß Ansicht II aus Fig.1,
- Fig. 3: Draufsicht auf die Haltevorrichtung für das den Schwingungserreger haltende, plattenartige Bauteil gemäß Ansicht III aus Fig.2 in Alleinstellung,
- Fig. 4: eine vergrößerte Ansicht gemäß Ansicht IV aus Fig.2, jedoch in einer anderen Ausführung,
- Fig. 5: den vorderen Teil eines Kraftfahrzeugs von der Seite in einer weiteren Ausführungsform der Erfindung,
- Fig. 6: eine mit Fig. 2 vergleichbare Ansicht auf noch eine weitere Ausführungsform der Erfindung,
- Fig. 7: das ohne Schwingungserreger dargestellte, flächige Bauteil in einer ersten Ausführungsform,
- Fig. 8: das ohne Schwingungserreger dargestellte, flächige Bauteil in einer zweiten Ausführungsform,
- Fig. 9: die Befestigung des Bauteils mit dem Schwingungserreger an einer bodenseitigen Wandung einer Motorabschirmung,
- Fig. 10: die Befestigung des Bauteils mit dem Schwingungserreger an einer oberen Wandung einer Motorabschirmung,
- Fig. 11: zeigt eine detailliertere Darstellung der bodenseitigen Wandung gemäß Fig. 9 und
- Fig. 12: zeigt eine detaillierte Darstellung zur Fig. 11.

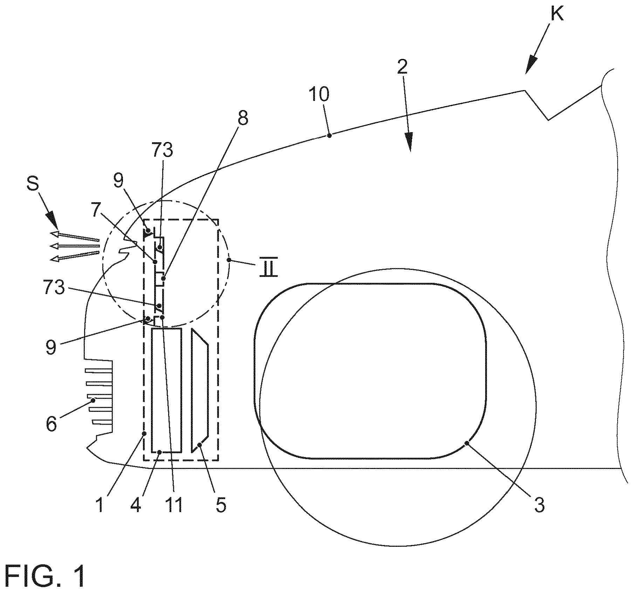

Aus der Fig. 1 ist ein Kraftfahrzeug K ersichtlich, welches als reines Elektrofahrzeug ausgebildet ist. Die erfindungsgemäße Lösung ist selbstverständlich auch für andere, "geräuschlos" antreibbare Kraftfahrzeuge, wie beispielsweise in der Beschreibungseinleitung genannt, nutzbringend einsetzbar.

Das Kraftfahrzeug K weist einen durch eine Motorhaube 10 abdeckbaren Motorraum 2 mit einem Elektromotor 3 auf, der zur Traktion des Kraftfahrzeugs K dient.

Im vorderen Bereich des Kraftfahrzeugs K (so genanntes Frontend) ist ein Träger 1 (Montageträger) ersichtlich, an dessen unteren Bereich ein Kühler 4 und ein Lüfter 5 montiert bzw. aufgenommen sind.

Der Kühler 4 dient zur Kühlung von Leistungselektronik und Leistungsaggregaten, wie beispielsweise des Elektromotors 3.

Vordem Kühler 4 sind Lufteinlässe 6 vorgesehen, damit beim Fahren des Kraftfahrzeugs K anströmende Luft leichter zum Kühler 4 gelangen kann.

Oberhalb des Kühlers 4 ist ein plattenartiges Bauteil 7 mittels eines rahmenartigen Halteteils 11 am Montageträger 1 befestigt. Am Bauteil 7 ist wiederum ein Schwingungserreger 8 in etwa mittig zur Flächenerstreckung des plattenförmigen Bauteils 7 angebracht.

Der Schwingungserreger 8 kann beispielsweise piezoelektrisch, elektrostatisch, magnetisch, elektromagnetisch oder in anderer geeigneter Weise arbeiten. Er dient zur Schwingungsanregung des plattenförmigen Bauteils 7, wobei der Schwingungserreger 3 in seinen Frequenzen regelbar sein kann. Notwendige elektrische Anschlüsse sind nicht näher dargestellt.

Um das plattenförmige Bauteil 7 schwingungstechnisch und/oder akustisch von der Karosserie des Kraftfahrzeugs K optimal zu entkoppeln, ist das Bauteil 7 an Befestigungspunkten 73 schwingungsentkoppelt mit dem rahmenartigen Halteteil 11 und das rahmenartige Halteteil 11 wiederum über schwingungsentkoppelnde Befestigunselemente 9 am Montageträger 1 verbunden. Die Befestigungselemente 9 sind bevorzugt als Mehrkomponenten-Bauteile (beispielsweise Stahl/Elastomer) ausgebildet.

Durch die Positionierung des Bauteils 7 mitsamt Schwingungserreger 8 im Montageträger 1 ist bereits eine sehr gute Schallabstrahlung S in Fahrtrichtung und damit eine äußerst gute Warnwirkung für Passanten möglich.

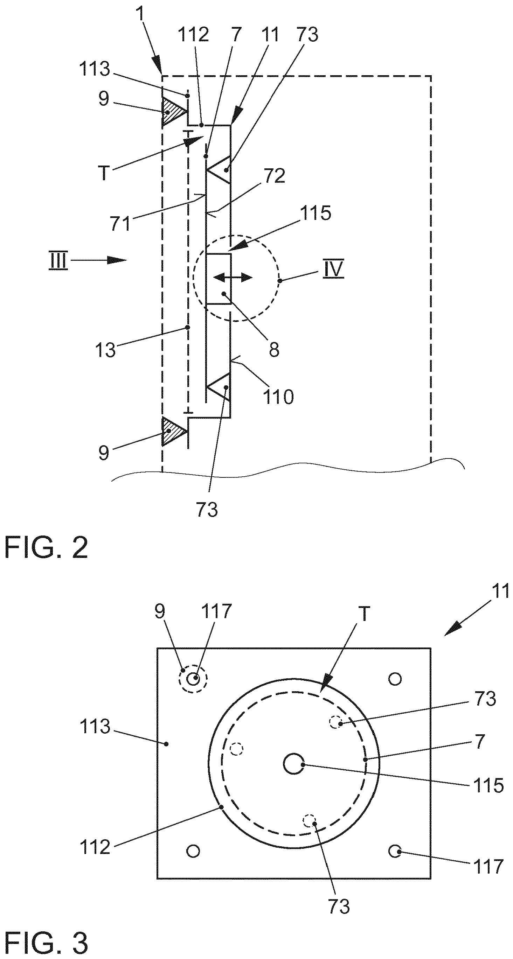

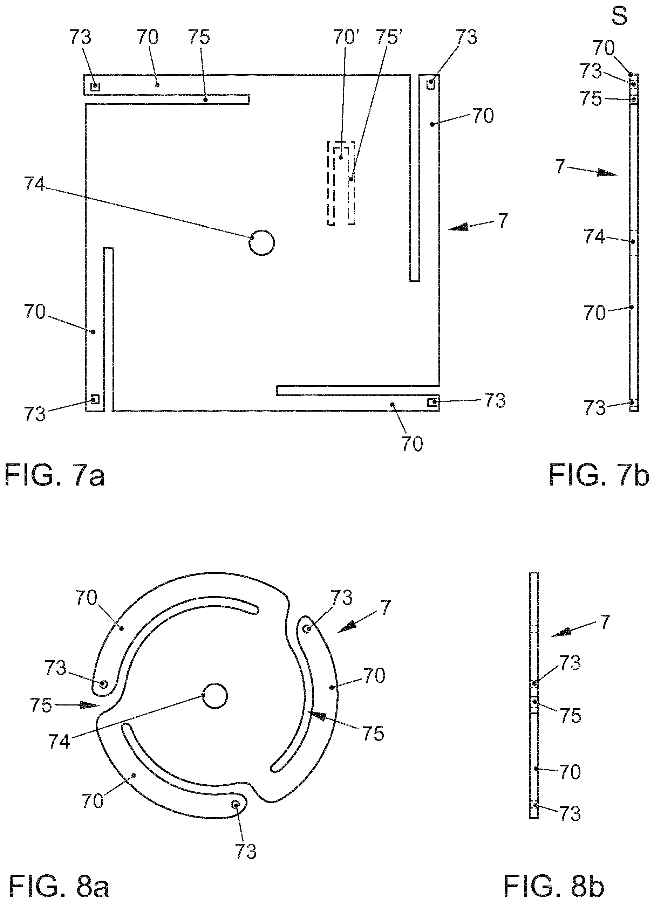

Fig. 2 und 3 zeigen, dass das rahmenartige Halteteil 11 eine kreisrunde, tellerartige Vertiefung T aufweist, in die das Bauteil 7 (vgl. auch Fig. 8) eingelassen und an Befestigungspunkten 73 (Öffnungen) mit dem Halteteil 11 schwingungsentkoppelt verbunden ist.

Die Vertiefung T ist von einem flanschartigen Rahmen 113 umgeben, welcher ebenso Befestigungspunkte 117 (Öffnungen) aufweist, um das Halteteil 11 an diesen Befestigungspunkten 117 mittels nicht näher dargestellter, schwingungsentkoppelnder Befestigungselemente 9 am Träger 1 zu montieren.

Die Vertiefung T wird durch eine umlaufende, seitliche Wandung 112 gebildet, die in eine rückseitige Wandung 110 übergeht. "Rückseitig" bedeutet in diesem Fall also dem Motor 3 zugewandt (vgl. auch Fig.1). Wie ersichtlich, deckt die Wandung 110 des Halteteils 11 einen Großteil einer ihr zugewandten Rückseite 72 des plattenartigen Bauteils 7 ab, so dass die Rückseite 72 des Bauteils 7 weitgehend nicht mehr sichtbar ist. Lediglich im Zentrum der Wandung 110 verbleibt eine bevorzugt kreisrunde Öffnung 115. Die Öffnung 115 umgibt den Schwingungserreger 8 in unmittelbarer Nähe, vorzugsweise konzentrisch. Durch die Öffnung 115, die in ihrem Durchmesser vorzugsweise nur geringfügig größer ist als die Flächenausdehnung des Schwingungserregers 8 in gleicher Richtung, kann bei guter Abschirmung eine ungehinderte Beweglichkeit des Schwingungserregers 8 sichergestellt werden. Auch ist dadurch eine insgesamt flache und kompakte Bauweise des Halteteils 11 möglich.

Ferner kann ein Frontgitter 13 zum besseren Schutz einer ansonsten durch das Halteteil 11 unbedeckten Vorderseite 71 des Bauteils 7 vorhanden sein.

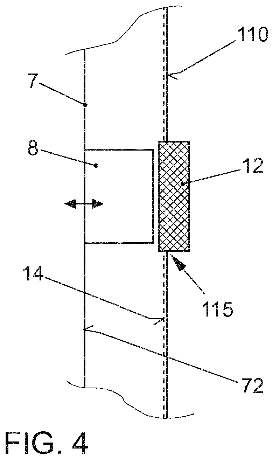

In Fig. 4 ist dargestellt, dass die Öffnung 115 mit einer Abdeckung 12 versehen sein kann. Die Abdeckung 12 ist flexibel und luftdurchlässig und kann beispielsweise aus Schaumstoff sein.

Zusätzlich oder alternativ kann die rückseitige Wandung 110 eine schallabsorbierende Oberfläche 14 aufweisen. Diese kann einstückig mit der Wandung 110 verbunden oder auch als schallabsorbierender Überzug (z.B. Vlies) ausgebildet sein.

Das Halteteil 11 ist in den Ausführungsbeispielen einstückig ausgebildet. Davon abweichend ist natürlich denkbar, das Halteteil 11 auch mehrteilig auszubilden.

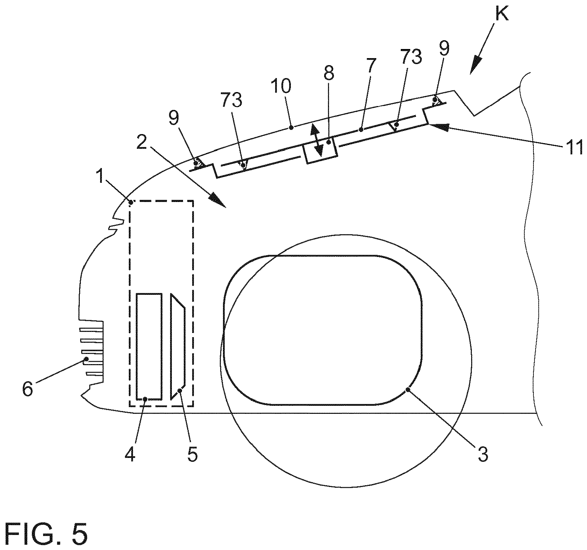

Der Fig. 5 ist entnehmbar, dass das Halteteil 11 für das Schallerzeugungssystem (7,8) in gleicher Weise auch an der Motorhaube 11 angebracht sein kann.

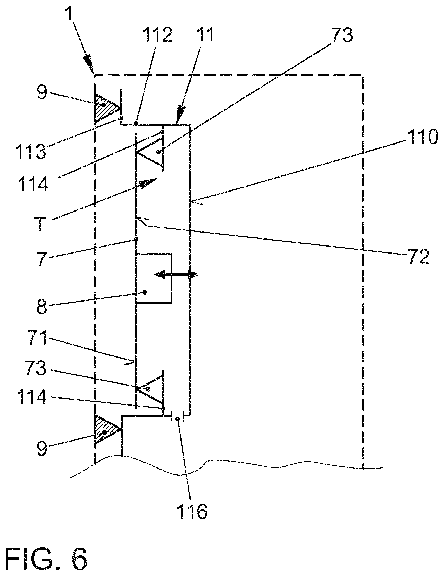

Fig. 6 beschreibt eine andere Ausführungsform der Erfindung, bei der im Unterschied zur Fig. 2 die rückseitige Wandung 110 vollständig verschlossen ist. Das Bauteil 7 ist auf in der Vertiefung T befindlichen Flanschen 114 schwingungsentkoppelt an Befestigungspunkten 73 gehalten. Die Flansche 114 ermöglichen bei Bedarf einen größeren Abstand zur rückseitigen Wandung 110. Ferner ist eine Entlüftungsöffnung 116 zum Druckausgleich vorgesehen.

Diese Ausführungsform bietet die besten akustischen Eigenschaften, ist jedoch nicht ganz so kompakt wie die Lösung gemäß Fig. 2.

Abweichend von den Ausführungsbeispielen kann der Schwingungserreger 8 gleichermaßen auch an der Vorderseite 71 des plattenartigen Bauteils 7 montiert sein. Auch können mehrere Schwingungserreger 8 an der Vorder- und/oder Rückseite 71,72 des plattenartigen Bauteils 7 angebracht werden.

Wie aus Fig. 7 ersichtlich ist, kann das plattenartige Bauteil 7 im Umriss beispielsweise viereckig, insbesondere in etwa quadratisch sein kann. Es weist umfangseitig vier zungenartige Elemente 70 auf, welche einstückig mit dem Bauteil 7 verbunden sind und an ihren Enden mit Befestigungspunkten 73 in Form von Öffnungen versehen sind. Mit 75 sind lichte Zwischenräume beziffert.
Anstatt umfangseitig können zungenartige Elemente jedoch auch weiter innen auf der Fläche des Bauteils 7 angeordnet sein, wie durch die Bezugszeichen 70' und 75' gestrichelt und beispielhaft angedeutet ist. Im Zentrum des Bauteils 7 ist eine Befestigungsöffnung 74 für den Schwingungserreger 8 (dieser ist hier nicht dargestellt) ersichtlich.

In Abweichung dazu zeigt Fig. 8 das plattenartige Bauteil 7 mit einer im Umriss in etwa kreisrunden Form, welches insbesondere bei beengten Platzverhältnissen bevorzugt eingesetzt werden kann.

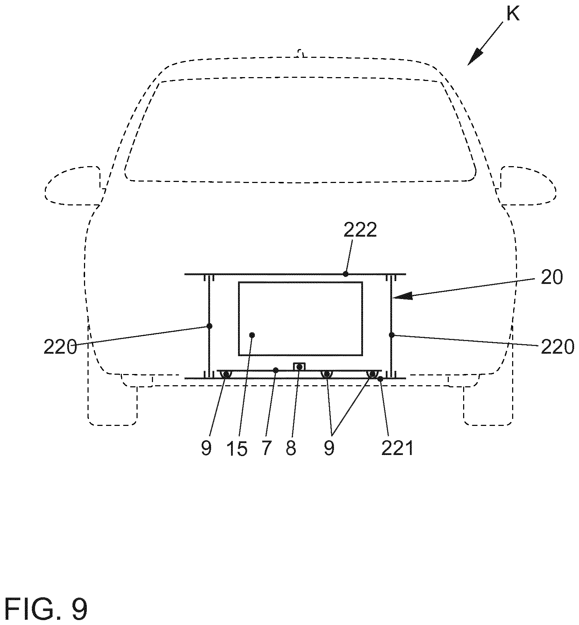

Fig. 9 zeigt als weitere Ausführungsform ein Kraftfahrzeug K, insbesondere ein Hybridfahrzeug, mit einem Motorblock 15 (nur Verbrennungsmotor dargestellt) ersichtlich, welcher durch eine kapselartige Motorabschirmung 20 seitlich durch seitliche Wandungen 220, nach unten zu einer nicht dargestellten Fahrbahn durch eine bodenseitige Wandung 221 und nach oben durch eine obere Wandung 222 abgeschirmt ist.

Notwendige andere Aggregate sowie Durchbrüche für Abgas-, Versorgungsleitungen und dergleichen sind nicht dargestellt.

Abweichend vom dargestellten Ausführungsbeispiel ist es denkbar, dass die Motorabschirmung 20 auch aus weniger oder mehr der dargestellten Wandungen 220 bis 222 besteht.

Im vorliegenden Fall ist an der bodenseitigen Wandung 221, und zwar auf der dem Motorblock 15 zugewandten Innenseite, ein plattenartiges Bauteil 7 über schwingungsentkoppelnde Befestigungselemente 9 befestigt. Das Bauteil 7 trägt wiederum auf seiner dem Motor 15 zugewandten Seite einen Schwingungserreger 8. Der Schwingungserreger 8 kann beispielsweise piezoelektrisch, elektrostatisch, magnetisch, elektromagnetisch oder in anderer geeigneter Weise arbeiten.

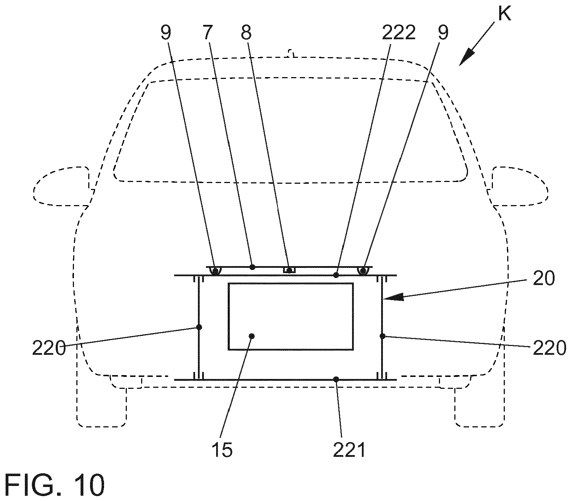

Aus Fig. 10 ist als weitere Ausführungsform ein Kraftfahrzeug K mit einer Motorabschirmung 20 ersichtlich, bei der im Gegensatz zur Fig. 9 das flächige, den Schwingungserreger 8 tragende Bauteil 7 außen an der oberen Wandung 222 der Motorabschirmung 20 befestigt ist. Auch hier ist der Schwingungserreger 8 wieder an der dem Motor 15 zugewandten Seite des plattenartigen Bauteils 7 angebracht.

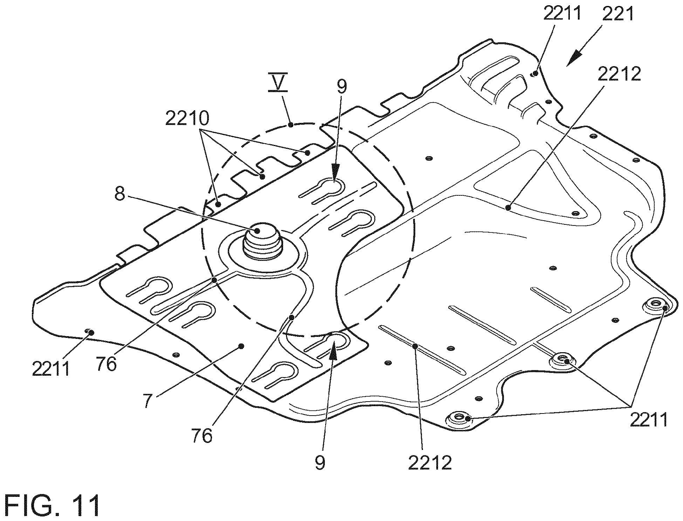

Die Fig. 11 zeigt nun eine etwas detailliertere Darstellung der bodenseitigen Wandung 221 gemäß Fig. 9.

Die Wandung 221 weist einen äußeren, rahmenartig umlaufenden Befestigungsbereich auf, in dem einerseits auf die Karosserie aufschiebbare Halterungsflansche 2210 und andererseits Befestigungsösen 2211 zur Verschraubung mit der Karosserie angeordnet sind. Als Werkstoff für die Wandung 221 ist beispielsweise Polypropylen (PP) gut geeignet.

Zur Erreichung eines gewünschten Steifigkeitsgrades sind Verstärkungsrippen 2212 vorgesehen.

Das den Schwingungserreger 8 tragende, plattenartige Bauteil 7 ist im vorderen Bereich der Wandung 221 über die schwingungsentkoppelnden Befestigungselemente 9 an der Wandung 221 befestigt, bspw. verschraubt. Auch das Bauteil 7 kann mit Verstärkungsrippen 76 versehen sein.

Notwendige elektrische Leitungen zur elektrischen Ansteuerung und bordnetzseitigen Spannungsversorgung des Schwingungserregers 8 sind nicht weiter dargestellt.

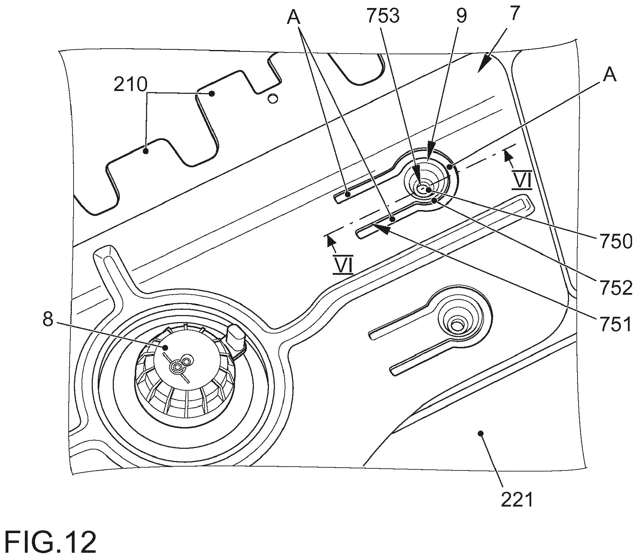

Wie aus Fig. 12 ersichtlich ist, sind die schwingungsentkoppelnden Befestigungselemente 9 als zungenartige Elemente 751 einstückig mit dem Bauteil 7 verbunden. Sie weisen einen verbreiterten, runden Endbereich 752 mit einer tassenartigen Vertiefung 753 auf.

Am Boden der tassenartigen Vertiefung 753 ist eine Befestigungsöffnung 750 vorhanden, an der der Endbereich 752 des zungenartigen Elementes 751 und damit das Bauteil 7 mit der bodenseitigen Wandung 221 der Motorabschirmung 20 befestigt, beispielsweise verschraubt werden kann. Dazu weist auch die Wandung 221 eine geeignete Befestigungsöffnung auf. Die zungenartigen Elemente 751 werden dadurch gebildet, dass die Befestigungsöffnungen 750 jeweils von einer schlitzartigen Ausnehmung A umgeben sind.

Die Erfindung ist nicht auf das bzw. die obigen Ausführungsbeispiele beschränkt. Diese wurden nur zur allgemeinen Erläuterung des Kerngedankens der Erfindung herangezogen. Der Schutzumfang ist durch die Ansprüche gegeben.

### Bezugszeichenliste

- 1: Träger zur Montage mehrerer Aggregate, u.a. Kühler, Lüfter ("Montageträger")
- 2: Motorraum
- 3: Elektromotor
- 4: Kühler
- 5: Lüfter
- 6: Lufteinlässe
- 7: plattenartiges Bauteil
- 70: zungenartige Elemente
- 71: Vorderseite des plattenartigen Bauteils
- 72: Rückseite des plattenartigen Bauteils
- 73: Befestigungspunkte
- 74: Befestigungsöffnung
- 75: lichte Zwischenräume
- 751: zungenartiges Element
- 752: Endbereich des zungenartigen Elementes
- 753: tassenartige Vertiefung
- 76: Verstärkungsrippen
- 8: Schwingungserreger
- 9: schwingungsentkoppelnde Befestigungselemente
- 90: Befestigungsöffnung
- 91: zungenartiges Element
- 92: Endbereich des zungenartigen Elementes
- 93: tassenartige Vertiefung 10 Motorhaube
- 11: rahmenartiges Halteteil
- 110: rückseitige Wandung
- 112: umlaufende, seitliche Wandung
- 113: Befestigungsflansch
- 114: Befestigungsflansch
- 115: Öffnung
- 116: Entlüftungsöffnung
- 117: Befestigungspunkte
- 12: Abdeckung aus Schaumstoff
- 13: Frontgitter
- 14: schallabsorbierende Oberfläche
- 15: Motor
- 20: Motorabschirmung
- 220: seitliche Wandungen der Motorabschirmung
- 221: bodenseitige Wandung der Motorabschirmung
- 222: obere Wandung der Motorabschirmung

- K: Kraftfahrzeug
- S: Schall
- T: tellerartige Vertiefung
- A: schlitzartige Ausnehmung

## Patentansprüche

1. Kraftfahrzeug (K) mit wenigstens einem Schallerzeugungssystem (7,8) zur Erzeugung eines künstlichen Motorengeräusches, welches (7,8) zumindest einen elektrisch ansteuerbaren Schwingungserreger (8) und ein Bauteil (7) aufweist, an dem der Schwingungserreger (8) befestigt ist, wobei der Schwingungserreger (8) zur Schwingungsanregung des Bauteils (7) dient und das Bauteil (7) von einer Karosserie des Kraftfahrzeugs (K) akustisch und/oder schwingungstechnisch entkoppelt (9,70) ist, **dadurch gekennzeichnet, dass** das Bauteil (7) flächig ausgebildet ist und seinerseits über eine Haltevorrichtung (11) am Kraftfahrzeug (1,10, 20) gehalten ist, welche (11) das Bauteil (7) zumindest zu einem überwiegenden Teil verdeckt und dass der Schwingungserreger (8) an einer solchen Seite (72) des Bauteils (7) befestigt ist, welche von der Haltevorrichtung (11) zumindest zu einem überwiegenden Teil verdeckt wird.

2. Kraftfahrzeug (K) nach Anspruch 1, **dadurch gekennzeichnet, dass** die Haltevorrichtung (11) eine Öffnung (115) aufweist, die im Bereich des Schwingungserregers (8) angeordnet ist und diesen umgibt.

3. Kraftfahrzeug (K) nach Anspruch 2, **dadurch gekennzeichnet, dass** die Öffnung (115) durch ein luftdurchlässiges und flexibles Material (12) verschlossen ist.

4. Kraftfahrzeug (K) nach Anspruch 1, **dadurch gekennzeichnet, dass** das Bauteil (7) von der Haltevorrichtung (11,110) vollständig abgedeckt wird.

5. Kraftfahrzeug (K) nach einem der vorhergehenden Ansprüche, **dadurch gekennzeichnet, dass** die Haltevorrichtung (11) einstückig ausgebildet ist.

6. Kraftfahrzeug (K) nach einem der vorhergehenden Ansprüche, **dadurch gekennzeichnet, dass** am Bauteil (7) zungenartige, einstückig mit diesem verbundene Elemente (70) vorhanden sind.

7. Kraftfahrzeug (K) nach einem der vorhergehenden Ansprüche, **dadurch gekennzeichnet, dass** das Bauteil (7) akustisch und/oder schwingungstechnisch entkoppelt (70,73) an der Haltevorrichtung (11) und diese (11) wiederum akustisch und/oder schwingungstechnisch entkoppelt (9) an einem anderen Bauteil (1,10) des Kraftfahrzeugs (K) befestigt ist.

8. Kraftfahrzeug (K) nach einem der vorhergehenden Ansprüche, **dadurch gekennzeichnet, dass** die Haltevorrichtung (11) eine Vertiefung (T) aufweist, in die das den Schwingungserreger (8) haltende Bauteil (7) eingelassen ist.

9. Kraftfahrzeug (K) nach einem der vorhergehenden Ansprüche, **dadurch gekennzeichnet, dass** das Bauteil (7) im Umriss eine in etwa kreisrunde Form aufweist.

10. Kraftfahrzeug (K) nach einem der vorhergehenden Ansprüche, **dadurch gekennzeichnet, dass** das Bauteil (7) an einem solchen Träger (1) befestigt ist, an dem zumindest auch wenigstens ein Kühler (4) gehalten ist.

11. Kraftfahrzeug (K) nach einem der Ansprüche 1 bis 9, **dadurch gekennzeichnet, dass** das Bauteil (7) an einer Motorabschirmung (20) befestigt ist.

12. Kraftfahrzeug (K) nach Anspruch 11, **dadurch gekennzeichnet, dass** das Bauteil (7) an einer bodenseitigen Wandung (221) der Motorabschirmung (20) befestigt ist.

13. Kraftfahrzeug (K) nach Anspruch 11, **dadurch gekennzeichnet, dass** das Bauteil (7) an einer oberen Wandung (222) der Motorabschirmung (20) befestigt ist.

14. Träger (1) für ein Kraftfahrzeug (K), wenigstens einen Kühler (4) und wenigstens ein mit wenigstens einem elektrisch ansteuerbaren Schwingungserreger (8) verbundenes, flächig ausgebildetes Bauteil (7) haltend, wobei der Schwingungserreger (8) zur Schwingungsanregung des Bauteils (7) dient und das Bauteil (7) akustisch und/oder schwingungstechnisch entkoppelt (9) an einer Haltevorrichtung (11) gehalten und von dieser zumindest zu einem überwiegenden Teil verdeckt wird, wobei der Schwingungserreger (8) an einer solchen Seite (72) des Bauteils (7) besfestigt ist, welche von der Haltevorrichtung (11) zumindest zu einem überwiegenden Teil verdeckt wird.

## Claims

1. Motor vehicle (K) having at least one sound-generating system (7, 8) for generating artificial engine noise, which system (7, 8) has at least one electrically controllable vibration exciter (8) and one component (7) to which the vibration exciter (8) is attached, wherein the vibration exciter (8) serves to excite vibrations of the component (7), and the component (7) is decoupled (9, 70) from the bodywork of the motor vehicle (K) acoustically and/or in terms of vibrations, **characterized in that** the component (7) is of planar design and is itself secured to the motor vehicle (1, 10, 20) by means of a securing device (11), which device (11) at least for the most part covers the component (7), and **in that** the vibration exciter (8) is attached to a side (72) of the component (7) which is at least for the most part covered by the securing device (11).

2. Motor vehicle (K) according to Claim 1, **characterized in that** the securing device (11) has an opening (115) which is arranged in the region of the vibration exciter (8) and surrounds it.

3. Motor vehicle (K) according to Claim 2, **characterized in that** the opening (115) is closed off by an air-permeable and flexible material (12).

4. Motor vehicle (K) according to Claim 1, **characterized in that** the component (7) is completely covered by the securing device (11, 110).

5. Motor vehicle (K) according to one of the preceding claims, **characterized in that** the securing device (11) is embodied in one piece.

6. Motor vehicle (K) according to one of the preceding claims, **characterized in that** on the component (7) there are tongue-like elements (70) which are integrally connected thereto.

7. Motor vehicle (K) according to one of the preceding claims, **characterized in that** the component (7) is attached to the securing device (11) in a way which is decoupled (70, 73) acoustically and/or in terms of vibration, and this device (11) is attached to another component (1, 10) of the motor vehicle (K) in a way which is in turn decoupled (9) acoustically and/or in terms of vibration.

8. Motor vehicle (K) according to one of the preceding claims, **characterized in that** the securing device (11) has a depression (T) into which the component (7) which secures the vibration exciter (8) is let.

9. Motor vehicle (K) according to one of the preceding claims, **characterized in that** the component (7) has an approximately circular shape in outline.

10. Motor vehicle (K) according to one of the preceding claims, **characterized in that** the component (7) is attached to a carrier (1) to which at least one radiator (4) is also secured.

11. Motor vehicle (K) according to one of Claims 1 to 9, **characterized in that** the component (7) is attached to an engine cover (20).

12. Motor vehicle (K) according to Claim 11, **characterized in that** the component (7) is attached to a bottom-side wall (221) of the engine cover (20).

13. Motor vehicle (K) according to Claim 11, **characterized in that** the component (7) is attached to an upper wall (222) of the engine cover (20).

14. Carrier (1) for a motor vehicle (K), at least one radiator (4) and at least one component (7) which is embodied in a planar fashion and is connected to at least one electrically controllable vibration exciter (8), wherein the vibration exciter (8) serves to excite vibrations of the component (7), and the component (7) is secured to a securing device (11) in a way which is decoupled (9) acoustically and/or in terms of vibration, and said cover (7) is covered at least for the most part by said securing device (11), wherein the vibration exciter (8) is attached to a side (72) of the component (7) which is at least for the most part covered by the securing device (11).

## Revendications

1. Véhicule à moteur (K) doté d'au moins un système générateur de son (7, 8) pour produire un bruit de moteur artificiel, lequel système (7, 8) comprend au moins un générateur de vibrations (8) pouvant être commandé électriquement et un composant (7) auquel le générateur de vibrations (8) est fixé, le générateur de vibrations (8) servant à l'excitation vibratoire du composant (7) et le composant (7) étant découplé (9, 70) d'une carrosserie du véhicule à moteur (K) acoustiquement et/ou en termes de technique vibratoire, **caractérisé en ce que** le composant (7) est réalisé de manière plane et est pour sa part retenu sur le véhicule à moteur (1, 10, 20) par le biais d'un dispositif de retenue (11), lequel (11) recouvre le composant (7) au moins dans une large mesure, et **en ce que** le générateur de vibrations (8) est fixé à un côté (72) du composant (7), lequel côté est recouvert au moins dans une large mesure par le dispositif de retenue (11).

2. Véhicule à moteur (K) selon la revendication 1, **caractérisé en ce que** le dispositif de retenue (11) comprend une ouverture (115) qui est disposée dans la région du générateur de vibrations (8) et entoure celui-ci.

3. Véhicule à moteur (K) selon la revendication 2, **caractérisé en ce que** l'ouverture (115) est fermée par un matériau (12) perméable à l'air et souple.

4. Véhicule à moteur (K) selon la revendication 1, **caractérisé en ce que** le composant (7) est recouvert complètement par le dispositif de retenue (11, 110).

5. Véhicule à moteur (K) selon l'une des revendications précédentes, **caractérisé en ce que** le dispositif de retenue (11) est réalisé d'une seule pièce.

6. Véhicule à moteur (K) selon l'une des revendications précédentes, **caractérisé en ce que** des éléments (70) de type languettes et reliés d'une seule pièce au composant (7) sont prévus sur celui-ci.

7. Véhicule à moteur (K) selon l'une des revendications précédentes, **caractérisé en ce que** le composant (7) est fixé au dispositif de retenue (11) de manière découplée (70, 73) acoustiquement et/ou en termes de technique vibratoire et celui-ci (11) est pour sa part fixé à un autre composant (1, 10) du véhicule à moteur (K) de manière découplée (9) acoustiquement et/ou en termes de technique vibratoire.

8. Véhicule à moteur (K) selon l'une des revendications précédentes, **caractérisé en ce que** le dispositif de retenue (11) comprend un évidement (T) dans lequel le composant (7) retenant le générateur de vibrations (8) est encastré.

9. Véhicule à moteur (K) selon l'une des revendications précédentes, **caractérisé en ce que** le composant (7) présente un contour de forme approximativement circulaire.

10. Véhicule à moteur (K) selon l'une des revendications précédentes, **caractérisé en ce que** le composant (7) est fixé à un support (1) sur lequel au moins également au moins un radiateur (4) est retenu.

11. Véhicule à moteur (K) selon l'une des revendications 1 à 9, **caractérisé en ce que** le composant (7) est fixé à un écran de moteur (20).

12. Véhicule à moteur (K) selon la revendication 11, **caractérisé en ce que** le composant (7) est fixé à une paroi (221) côté sol de l'écran de moteur (20).

13. Véhicule à moteur (K) selon la revendication 11, **caractérisé en ce que** le composant (7) est fixé à une paroi supérieure (222) de l'écran de moteur (20).

14. Support (1) pour un véhicule à moteur (K), retenant au moins un radiateur (4) et au moins un composant (7) réalisé de manière plane et relié à au moins un générateur de vibrations (8) pouvant être commandé électriquement, le générateur de vibrations (8) servant à l'excitation vibratoire du composant (7) et le composant (7) étant retenu sur un dispositif de retenue (11) de manière découplée (9) acoustiquement et/ou en termes de technique vibratoire et étant recouvert par celui-ci au moins dans une large mesure, le générateur de vibrations (8) étant fixé à un côté (72) du composant (7), lequel côté est recouvert au moins dans une large mesure par le dispositif de retenue (11).
